# EUROPÄISCHE PATENTSCHRIFT

(11) **EP 0 987 168 B1**
(45) Veröffentlichungstag und Bekanntmachung des Hinweises auf die Patenterteilung: **06.10.2004**
(21) Anmeldenummer: 99114656.4
(22) Anmeldetag: 27.07.1999
(51) Int. Cl.: B62D 25/08

(54) **Trennanordnung für eine selbsttragende Karosserie**
Partition for a monocoque body
Cloison pour une carrosserie monocoque

(30) Priorität: 19.09.1998 DE 19843025
(43) Veröffentlichungstag der Anmeldung: 22.03.2000
(73) Patentinhaber: DaimlerChrysler AG, 70567 Stuttgart (DE)
(72) Erfinder: Röhl, Wolfgang, 71069 Sindelfingen (DE); Sikorski, Jörg, 70199 Stuttgart (DE)

(56) Entgegenhaltungen:
- DE-A- 3 409 667
- US-A- 5 580 121
- US-A- 5 788 322
- PATENT ABSTRACTS OF JAPAN vol. 018, no. 177 (M-1582), 25. März 1994 (1994-03-25) -& JP 05 338558 A (TOYOTA), 21. Dezember 1993 (1993-12-21)

## Beschreibung

Die Erfindung betrifft eine Trennanordnung für eine selbsttragende Karosserie eines Kraftwagens der im Oberbegriff des Patentanspruchs 1 angegebenen Art.

Aus der JP 5338558 ist bereits eine derartige Trennanordnung als bekannt zu entnehmen, bei der am vorderen Ende eines Heckraumes eine sich in Fahrzeugquerrichtung über einen Teil ihrer Höhe zwischen hinteren Radhäusern erstreckende und an Begrenzungswänden des Heckraumes befestigte Stützanordnung vorgesehen ist. Die Stützanordnung ist in einer aufrechten Fahrzeugquerebene angeordnet und zur Aussteifung der Karosserie gegen Verwindung ausgebildet. Dabei umfasst die Stützeinrichtung eine Querstrebe, über welche die Dämpferdome im oberen Bereich der Radhäuser miteinander verbunden sind. Die Dämpferdome liegen dabei mit der Querstrebe in einer vertikalen Fahrzeugquerebene der Stützeinrichtung.

Eine weitere Stützeinrichtung ist aus der US 5 580 121 bekannt, welche aus einer Mehrzahl von am vorderen Ende eines Heckraumes angeordneten Blechformteilen gebildet ist. Die Stützeinrichtung erstreckt sich in Fahrzeugquerrichtung sowie über einen Teil der Höhe des Heckraumes zwischen den hinteren Radhäusern. Die Blechformteile sind dabei an Begrenzungswänden des Heckraumes befestigt, wobei die Dämpferdome im oberen Bereich der Radhäuser zur Aussteifung der Karosserie gegen Verwindung über die Stützeinrichtung miteinander verbunden sind.

Schließlich ist eine solche Trennanordnung aus dem Mercedes-Benz Roadster SLK bekannt und weist eine hintere Trennwand auf, die am vorderen Ende eines Heckraumes angeordnet ist. Der Heckraum umfasst einen Verdeckstauraum und einen Kofferraum. Die hintere Trennwand erstreckt sich in Fahrzeugquerrichtung ausgehend von einem Heckraumboden über einen Teil ihrer Höhe zwischen hinteren Radhäusern etwa vertikal, bevor sie im oberen Bereich der Radläufe nach vorne abgewinkelt in Richtung eines Querträgers verläuft, der etwa auf Höhe der Fensterbänke hinter den beiden Sitzen angeordnet ist. Eine sich von dem Querträger hinter den Sitzen im Bereich hinter den Seitentüren nach unten erstreckende vordere Trennwand, die unlösbar an der selbsttragenden Karosserie befestigt ist, begrenzt gemeinsam mit der hinteren Trennwand einen Raum, der zur Aufnahme des Kraftstoffbehälters dient. Um z.B. den Kraftstoffbehälter ein- und ausbauen zu können, ist die hintere Trennwand lösbar befestigt. Zudem dient die bei dieser Trennanordnung gezeigte hintere Trennwand insbesondere der vorderen Begrenzung des Heckraums. Daher besteht sie aus leichtem Aluminiumblech und führt nicht zu einer nennenswerten Aussteifung der Karosserie.

Aufgabe der Erfindung ist es daher, eine Trennanordnung für eine selbsttragende Karosserie eines Kraftwagens der im Oberbegriff des Patentanspruchs 1 angegebenen Art zu schaffen, die eine sehr guter Versteifung der selbsttragenden Karosserie gegen Verwindung ermöglicht.

Diese Aufgabe wird erfindungsgemäß durch eine Trennanordnung mit den Merkmalen des Patentanspruchs 1 gelöst. Vorteilhafte Ausführungsformen der erfindungsgemäßen Trennanordnung mit zweckmäßigen Weiterbildungen der Erfindung sind in den Unteransprüchen beschrieben.

Bei der Trennanordnung nach der Erfindung erstreckt sich die Abtrennung über die gesamte Höhe des Heckraumes und ist lösbar an den Begrenzungswänden des Heckraumes befestigt, wobei als Stützeinrichtung wahlweise eine hintere Trennwand oder ein Trenngerüst montierbar ist. Durch die Erstreckung der Stützeinrichtung über die nahezu gesamte Höhe des Heckraumes ergibt sich der Vorteil, dass diese sehr hoch an den Radhäusern bzw. an den Seitenwänden befestigbar ist und somit die Karosserie über eine große Höhenerstreckung versteift werden kann. Um einen Zugang zu vor der Stützeinrichtung liegenden Räumen zu schaffen, ist diese beispielsweise durch Schraubverbindungen lösbar an der Karosserie angeordnet.

Die Stützeinrichtung ist dabei wahlweise eine hintere Trennwand oder ein Trenngerüst montierbar. Dadurch kann auf einfache Weise das Fahrzeug anstatt mit einem serienmäßigen Trenngerüst mit einer hinteren Trennwand ausgestattet werden, die insbesondere zur Aufnahme eines Skisackes dient. Die Trennwand kann dabei über große Bereiche der Begrenzungswände des Heckraumes befestigt werden, um eine gute Kraftübertragung zu ermöglichen.

Es sich als vorteilhaft erwiesen, die im oberen Bereich der Radhäuser angeordneten Dämpferdome durch eine Querstrebe miteinander zu verbinden. Durch den unten liegenden Heckraumboden, die seitlichen Radhäuser und die oben angeordnete Querstrebe ist ein kastenförmiges Gebilde der Karosserie geschaffen, das durch die Stützeinrichtung sehr gut versteifbar ist. Durch eine Tragplatte, die mit der Querstrebe und den Dämpferdomen fest verbunden ist, kann dieses kastenförmige Gebilde zusätzlich versteift werden.

An der Unterseite der Tragplatte und an jeweils einem Dämpferdom festgelegte Winkelversteifungen schaffen nicht nur eine weitere Aussteifung des kastenförmigen Gebildes und der Kaross erie, sondern ermöglichen auch eine Befestigung der Stützeinrichtung weit oben und an der Seite des Heckraumes.

Eine vordere Trennwand, die am hinteren Ende des Fahrgastraumes angeordnet und an der Tragplatte befestigt ist, dient nicht nur einer Erhöhung der Torsionssteifigkeit in einem vorderen Bereich des kastenförmigen Gebildes der Karosserie, sondern schafft mit der hinteren Trennwand die Begrenzung eines Raumes insbesondere für einen Kraftstoffbehälter.

Schließlich ist es besonders vorteilhaft, wenn das Trenngerüst vier gerade Streben umfaßt, die an den Winkelversteifungen und im Eckbereich zwischen den Radhäusern und einem Heckraumboden lösbar befestigt sind. Vorteilhaft ist es dabei, wenn die einander gegenüberliegenden Streben gerade Diagonalen bilden, die die Winkelversteifungen mit den gegenüberliegenden Eckbereichen auf kürzestem Weg verbinden und somit eine gute Kraftübertragung zwischen den seitlichen oberen und unteren Bereichen des Heckraumes ermöglichen.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine perspektivische Ansicht des Hecks einer selbsttragenden Karosserie mit einer erfindungsgemäßen Trennanordnung nach einer bevorzugten Ausführungsform;
- Fig. 2: eine perspektivische Schrägansicht der Befestigung einer Trennwand und eines lediglich durch Diagonalen angedeuteten Trenngerüstes der erfindungsgemäßen Trennanordnung nach einer bevorzugten Ausführungsform;
- Fig. 3: eine schematische Schnittansicht durch die erfindungsgemäße Trennanordnung entlang einer in Fahrzeuglängsrichtung verlaufenden Schnittebene;
- Fig. 4: eine Vorderansicht einer Trennwand der erfindungsgemäßen Trennanordnung nach einer bevorzugten Ausführungsform;
- Fig. 5: einer Vorderansicht eines Trenngerüstes der erfindungsgemäßen Trennanordnung nach einer weiteren Ausführungsform;
- Fig. 6: eine vergrößerte Schnittansicht durch das Trenngerüst entlang der Linie IV-IV in Fig.5.

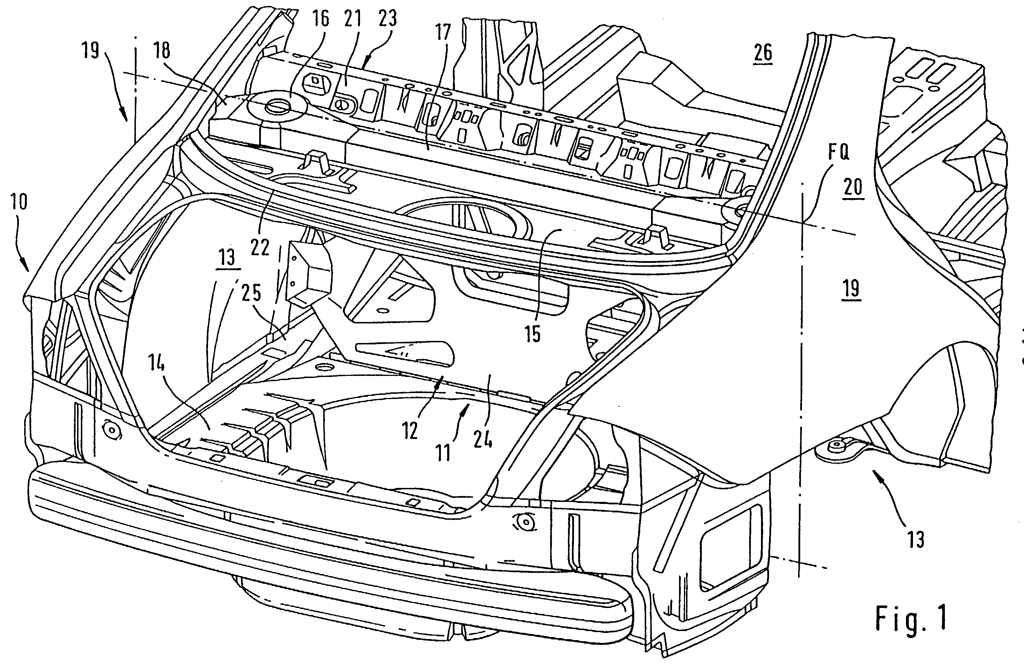

Fig.1 zeigt eine perspektivische Ansicht des Hecks einer selbsttragenden Karosserie mit einem Heckraum 10, der an seinem vorderem Ende 11 eine als Stützeinrichtung 12 ausgebildete Abtrennung aufweist. Die Stützeinrichtung 12 erstreckt sich in einer annähernd vertikalen Fahrzeugquerebene FQ zwischen hinteren Radhäusern 13 über die gesamte Höhe des Heckraumes 10, der unten von einem Heckraumboden 14 und oben an seinem vorderen Ende 11 von einer Tragplatte 15 für eine nicht dargestellte Hutablage begrenzt ist. Die im Bereich der Stützeinrichtung 12 seitlich liegenden Radhäuser 13 umfassen in ihrem oberen Bereich kegelstumpfförmige bzw. annähernd zylindrische Dämpferdome 16, die zur Aufnahme von Fahrwerksdämpfungsgliedern dienen. Dabei durchdringen die Dämpferdome 16 an ihrem oberen Ende die Tragplatte 15 und sind mit dieser fest verbunden. Zwischen den oberen Enden der Dämpferdome 16 ist zudem eine Querstrebe 17 angeordnet, die an der Oberseite der Tragplatte 15 und an den Dämpferdomen 16 befestigt ist. Sowohl die Dämpferdome 16 als auch die Querstrebe 17 liegen dabei in der Fahrzeugquerebene FQ. Zusätzlich ist die Querstrebe 17 durch zwei Seitenstreben 18 bis zu den Seitenwänden 19 der selbsttragenden Karosserie im Bereich von C-Säulen 20 verlängert. Die Tragplatte 15 verläuft annähernd horizontal und rechtwinklig zu der Fahrzeugquerebene FQ, wobei die Oberseite der Querstrebe 17 und der Dämpferdome 16 in einer Ebene liegen, die sich vorzugsweise etwa auf Höhe des unteren Endes einer nicht dargestellten Heckscheibe erstreckt. Die Tragplatte 15 ist von einem mittragenden vorderen und hinteren Trägerprofil 21,22 begrenzt, die ebenfalls an den Seitenwänden 19 der selbsttragenden Karosserie im Bereich der C-Säulen 20 befestigt sind. Das hintere Trägerprofil 22 bildet das untere Ende der Heckscheibe und den Übergangsbereich zwischen Heckscheibe und einem ebenfalls nicht dargestellten Heckraumdeckel bzw. Kofferraumdeckel. Das vordere Trägerprofil 21 bildet das obere Ende einer vorderen Trennwand 23, die den Fahrgastraum nach hinten begrenzt, sich in Fahrzeugquerrichtung und in einer aufrechten Lage erstreckt und neben dem vorderen Trägerprofil 21 der Tragplatte 15 auch an den Seitenwänden 19 und an einem nicht gezeigten Fahrgastraumboden befestigt ist. Zusammen mit der Stützeinrichtung 12, den Seitenwänden 19 und der Tragplatte 15 begrenzt die vordere Trennwand 23 einen Aufnahmeraum 36, der hier zur Aufnahme eines Kraftstoffbehälters dient. Den Eckbereich zwischen den Radhäusern 13 und dem Heckraumboden 14 bildet jeweils ein sich in Fahrzeuglängsrichtung erstreckender Längsträger 25.

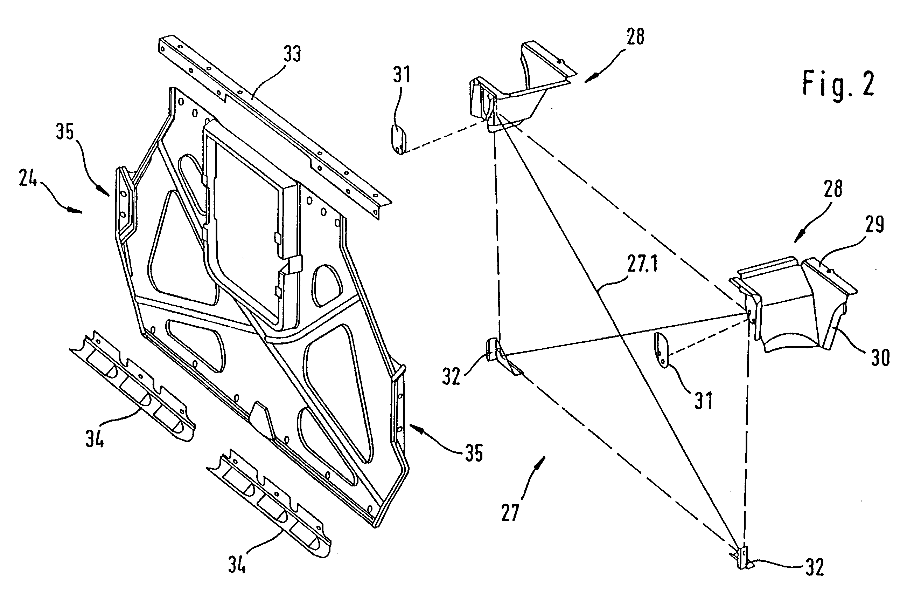

In dem in Fig.1 gezeigten Ausführungsbeispiel ist die Stützeinrichtung 12 als hintere Trennwand 24 aus Magnesiumdruckguß ausgebildet, die seitlich an den Radhäusern 13, unten an dem Heckraumboden 14 und oben an der Tragplatte 15 z.B. über Schraubverbindungen lösbar befestigt ist. Damit bilden die seitlich angeordneten Radhäuser 13 mit den Dämpferdomen 16, die ebenfalls seitlich angeordneten Seitenwände 19, der Heckraumboden 14 und die Tragplatte 15 mit der an ihr und den Dämpferdomen 16 befestigten Querstrebe 17 insgesamt ein kastenförmiges Gebilde der selbsttragenden Karosserie, das mit der Stützeinrichtung 12 fest verbunden ist, wobei die Stützeinrichtung insbesondere die Karosserie gegen Verwindung aussteifend und die Torsionsfestigkeit der Karosserie erhöhend ausgebildet ist. Auf die Beschreibung der besonderen Wirkungsweise und Ausgestaltung der Stützeinrichtung 12 wird unter Bezugnahme der Fig. 2 bis 5 noch näher eingegangen.

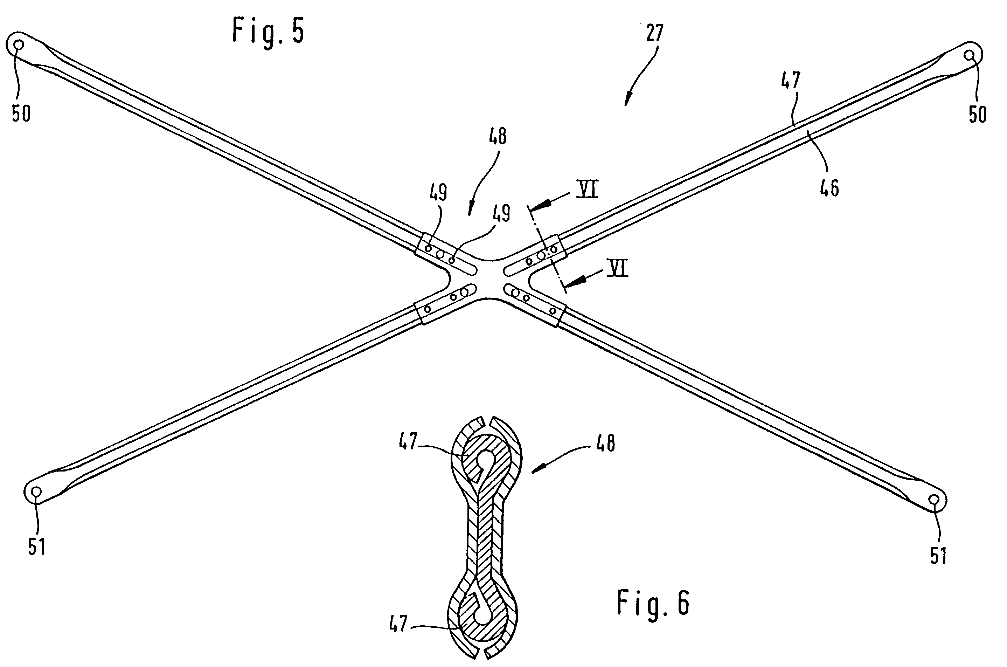

Fig.2 zeigt in perspektivischer Schrägansicht die Befestigung der Trennwand 24 und eines lediglich durch Diagonalen 27.1 angedeuteten Trenngerüstes 27. Das Trenngerüst 27, das insbesondere unter Bezugnahme von Fig.5 näher erläutert wird, ist im oberen Bereich des Heckraumes 10 an Winkelversteifungen 28 festgelegt, die an ihrem oberen Ende 29 mit der Tragplatte 15 und an ihrem seitlichen Ende 30 mit dem jeweiligen Dämpferdom 16 fest verbunden sind. Die Winkelversteifungen 28 sorgen damit für eine zusätzliche Versteifung zwischen dem jeweiligen Dämpferdom 16 und der Tragplatte 15 mit der Querstrebe 17.

Zur Befestigung des Trenngerüstes 27 an den Winkelversteifungen 28 dienen obere Halter 31, die an den Winkelversteifungen 28 fest angeordnet sind und eine Aufnahme beispielsweise für Schrauben schaffen, mit denen das Trenngerüst 27 an den Winkelversteifungen 28 festgelegt werden kann.

Im Eckbereich zwischen den Seitenwänden 19 und dem Heckraumboden 14 sind untere Halter 32 vorgesehen, die an dem jeweiligen seitlichen Längsträger 25 und der jeweiligen Seitenwand 19 befestigt sind. Das Trenngerüst 27 ist an den unteren Haltern 32 beispielsweise mit Schraubverbindungen lösbar befestigt.

Alternativ zu dem Trenngerüst 27 kann als Stützeinrichtung 12 bzw. Abtrennung des Heckraumes 10 die bereits in Fig. 1 gezeigte hintere Trennwand 24 eingesetzt werden. Die hintere Trennwand 24 ist mit Hilfe von einer oberen Winkelleiste 33 und zwei unteren Winkelleisten 34 an der Tragplatte 15 bzw. an dem Heckraumboden 14 z.B. mit Schraubverbindungen lösbar befestigt. Zusätzlich ist die hintere Trennwand 24 im Bereich von seitlichen Befestigungsabschnitten 35 an dem jeweils zugeordneten Radhaus 13 lösbar angeordnet.

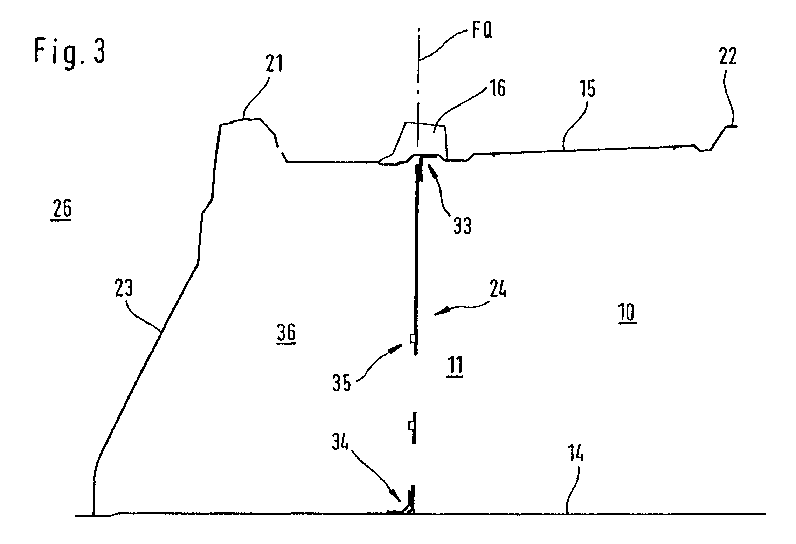

In Fig.3 ist eine seitliche, schematische Schnittansicht des Heckraumes 10 entlang einer in Fahrzeuglängsrichtung verlaufenden Schnittebene dargestellt. Dabei ist erkennbar, daß die in der Fahrzeugquerebene FQ verlaufende Trennwand 24 annähernd senkrecht angeordnet ist und der Dämpferdom 16 in der Fahrzeugquerebene FQ liegt. Die oben leicht nach schräg hinten geneigte vordere Trennwand 23 und die hintere Trennwand 24 begrenzen den Aufnahmeraum 36. Zwischen dem vorderen und hinteren Trägerprofil 21,22 erstreckt sich die Tragplatte 15, an der die obere Winkelleiste 33 zur Befestigung der Trennwand 24 sichtbar ist. Die untere Winkelleiste 34 zur Festlegung der Trennwand 24 an dem Heckraumboden 14 und die seitlichen Befestigungsabschnitte 35 zur Festlegung der Trennwand 24 an den Radhäusern 13 sind in Fig.3 ebenfalls angedeutet.

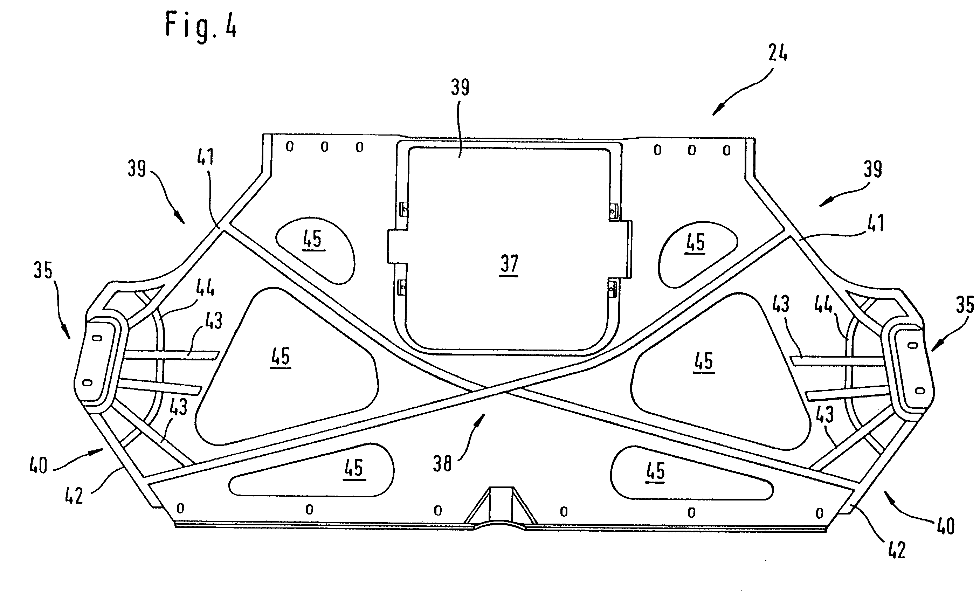

Fig.4 zeigt die Trennwand 24 mit einer zentral oben angeordneten Durchladeöffnung 37, die eine Lademöglichkeit insbesondere für einen Skisack bietet. Die Durchladeöffnung 37 ist beispielsweise durch eine Schwenkklappe 39 verschließbar. Selbstverständlich ist dabei die vordere Trennwand 23 und der Kraftstoffbehälter ebenfalls mit einer entsprechenden Öffnung versehen, um eine Durchlademöglichkeit von dem Heckraum 10 in den Fahrgastraum 26 zu schaffen. Seitliche obere und untere Bereiche 39,40 sind entsprechend der Kontur der Winkelversteifungen 28 bzw. der Eckbereiche zwischen Radhaus 13 und Heckraumboden 14 angepaßt. Als Verstärkung ist an die Trennwand 24 eine Diagonalstrebe 38 angeformt, die jeweils den seitlichen oberen Bereich 39 mit dem gegenüberliegenden seitlichen unteren Bereich 40 verbindet. Im seitlichen oberen Bereich 39 sind an die Trennwand 24 zwei obere seitliche Streben 41 angeformt, die in eingebauter Lage der Trennwand 24 die Winkelversteifungen 28 umgeben und die seitlichen Befestigungsstellen der oberen Winkelleiste 33 mit den benachbarten seitlichen Befestigungsabschnitten 35 an den Radhäusern 13 verbinden. Zwei untere seitliche Streben 42 erstrecken sich zwischen den seitlichen Befestigungsstellen der unteren Winkelleisten 34 und der benachbarten seitlichen Befestigungsabschnitten 35. Im Bereich der seitlichen Befestigungsabschnitte 35 sind weitere, strahlenförmig nach innen zeigende Streben 43 und die seitlichen Befestigungsabschnitte 35 mit Abstand umgebende Streben 44 vorgesehen, die die Trennwand 24 versteifen. Die Diagonalstrebe 38 ist mit den unteren seitliche Streben 42 und den oberen seitlichen Streben 41 verbunden und schafft somit eine Versteifung der selbsttragenden Karosserie in der bereits beschriebenen Art. Zwischen den Streben 41-44, ist die hintere Trennwand 24 mit Entlastungsöffnungen 45 durchbrochen, die eine gute Vergießbarkeit der Magnesiumdruckgußplatte und eine Gewichtseinsparung ermöglichen. Entlang der Ober- und Unterseite der hinteren Trennwand 24 sowie im Bereich der seitlichen Befestigungsabschnitte 35 sind Bohrungen für die Schraubverbindungen zwischen der Trennplatte 24 und oberen und unteren Winkelleisten 33,34 sowie den Radhäusern 13 vorgesehen.

In Fig.5 ist das Trenngerüst 27 gezeigt, das vier gerade, versickte Streben 46 umfaßt, die - wie in Fig.6 dargestellt - einen etwa C-förmigen Querschnitt mit seitlich gekröpften Verstärkungen 47 aufweist. In einem zentral angeordneten Gerüstkreuz 48, das aus zwei die Streben 46 umgebenden Teilen gebildet ist, sind die Streben 46 einstell- und befestigbar. Die Einstell- und Befestigbarkeit erfolgt mit Hilfe von Schraubverbindungen 49, mit denen die zwischen den beiden Teile des Gerüstkreuzes 48 angeordneten Streben 46 verspannt und gelöst werden können.

An ihren dem Gerüstkreuz 48 abgewandten Enden sind die Streben 46 flach aufgeweitet und weisen obere und untere Bohrungen 50,51 auf, mit denen das Trenngerüst 27 an den Winkelversteifungen 28 bzw. im Eckbereich zwischen dem jeweiligen Radhaus 13 und dem Heckraumboden 14 lösbar befestigbar ist. Die einander gegenüberliegenden Streben 46 sind dabei so über das Gerüstkreuz 47 miteinander verbunden, daß sie auf kürzestem Weg die Winkelversteifungen 28 mit den gegenüberliegenden Eckbereichen verbinden und somit eine gerade Diagonale bilden, die besonders gut zur Versteifung der Karosserie geeignet ist. Diese Diagonale ist zudem besonders weit oben und unten an den Seiten des Heckraumes 10 angeordnet, um besonders gute Aussteifungseigenschaften zu erzielen.

An der hinteren Trennwand 24 oder dem Trenngerüst 27 ist eine nicht dargestellte Abdeckung insbesondere aus einem Kunststoff mit Teppichüberzug angeordnet, mit der die Trennwand 24 bzw. das Trenngerüst 27 gegen den Heckraum 10 abdeckbar ist.

## Patentansprüche

1. Selbsttragende Karosserie eines Kraftwagens mit einer am vorderen Ende (11) eines Heckraumes (10) angeordneten Abtrennung, die sich in Fahrzeugquerrichtung sowie über einen Teil ihrer Höhe zwischen hinteren Radhäusern (13) des Kraftwagens erstreckt und an Begrenzungswänden des Heckraumes (10) befestigt ist, wobei die Abtrennung in einer aufrechten Fahrzeugquerebene (FQ) angeordnet und als die Karosserie gegen Verwindung aussteifende Stützeinrichtung (12) ausgebildet ist, wobei im oberen Bereich der Radhäuser (13) Dämpferdome (16) durch eine Querstrebe (17) miteinander verbunden sind, wobei die Dämpferdome (16) mit der Querstrebe (17) in einer vertikalen Fahrzeugquerebene (FQ) der Stützeinrichtung (12) liegen, und wobei die Abtrennung lösbar an den Begrenzungswänden des Heckraumes (10) befestigt ist,
**dadurch gekennzeichnet,**
**dass** als Stützeinrichtung (12) eine hintere Trennwand (24) montiert ist, die sich über die gesamte Höhe des Heckraumes (10) erstreckt, und
**dass** mit der Querstrebe (17) und den Dämpferdomen (16) eine Tragplatte (15) fest verbunden ist, die sich horizontal und rechtwinklig zu der Fahrzeugquerebene (FQ) erstreckt, wobei die hintere Trennwand (24) an der Tragplatte (15), den Radhäusern (13) und einem Heckraumboden (14) lösbar befestigt ist.

2. Selbsttragende Karosserie nach Anspruch 1,
**dadurch gekennzeichnet,**
**dass** die Querstrebe (17) zwei an der Unterseite der Tragplatte (15) und an jeweils einem Dämpferdom (16) festgelegte Winkelversteifungen (28) aufweist.

3. Selbsttragende Karosserie nach Anspruch 1,
**gekennzeichnet durch**
eine vordere Trennwand (23), die am hinteren Ende eines Fahrgastraumes (26) angeordnet ist, sich in Fahrzeugquerrichtung erstreckt, an der Tragplatte (15) befestigt ist und mit der Stützeinrichtung (12) einen Aufnahmeraum (36) insbesondere für einen Kraftstoffbehälter bildet.

4. Selbsttragende Karosserie nach Anspruch 1,
**dadurch gekennzeichnet,**
**dass** die hintere Trennwand (24) eine zentral angeordnete Durchladeöffnung (37) z.B. für einen Skisack aufweist.

5. Selbsttragende Karosserie nach Anspruch 1,
**dadurch gekennzeichnet,**
**dass** die hintere Trennwand (24) eine Magnesiumdruckgußplatte ist, die Entlastungsöffnungen (44) aufweist.

6. Selbsttragende Karosserie nach Anspruch 5,
**dadurch gekennzeichnet,**
**dass** als zentrale Verstärkung der Trennwand (24) eine Diagonalstrebe (38) angeformt ist.

## Claims

1. A unitised body of a motor vehicle having a separation positioned at the front end (11) of a rear compartment (10) which extends both across the vehicle and over part of its height between the rear wheel housings (13) of the motor vehicle and is fixed to delimiting walls of the rear compartment (10), the separation being positioned in an upright transverse vehicle plane (FQ) and designed as a supporting arrangement (12) to reinforce the body against distortion, damper towers (16) being connected together in the upper area of the wheel housings (13) by a cross strut (17), the damper towers (16) with the cross strut (17) lying in a vertical transverse vehicle plane (FQ) of the supporting device (12) and the separation being fixed to the delimiting walls of the rear compartment (10) in such a manner that it can be detached,
**characterised in that**
a rear separating wall (24) which extends over the entire height of the rear compartment (10) is fitted as the supporting arrangement (12), and connected permanently to the cross strut (17) and the damper towers (16) is a supporting plate (15) which extends horizontally and at right angles to the transverse vehicle plane (FQ), the rear separating wall (24) being fixed to the supporting plate (15), the wheel housings (13) and a rear compartment floor (14) in such a manner that it can be detached.

2. A unitised body in accordance with claim 1,
**characterised in that**
the cross strut (17) has two knee braces (28) which are fixed to the underside of the supporting plate (15) and to the damper towers (16).

3. A unitised body in accordance with claim 1,
**characterised in that**
a front separating wall (23) which is positioned at the rear end of a passenger compartment (26) extends across the vehicle, is fixed to the supporting plate (15) and together with the supporting arrangement (12) forms a receiving space (36) in particular for a fuel tank

4. A unitised body in accordance with claim I,
**characterised in that**
the rear separating wall (24) has a centrally positioned loading opening (37) for a ski bag, for example.

5. A unitised body in accordance with claim 1,
**characterised in that**
the rear separating wall (24) is a diecast magnesium plate which has relief openings (44).

6. A unitised body in accordance with claim 5,
**characterised in that**
a diagonal strut (38) is moulded to the separating wall (24) as a central reinforcement.

## Revendications

1. Carrosserie autoporteuse d'un véhicule automobile avec une séparation disposée sur l'extrémité avant (11) d'un compartiment arrière (10) qui s'étend dans le sens transversal du véhicule automobile ainsi que sur une partie de sa hauteur entre des caissons de roues arrières (13) du véhicule automobile et qui est fixée sur des cloisons de délimitation du compartiment arrière (10), dans laquelle la séparation est disposée sur un plan transversal vertical (FQ) du véhicule automobile et est configurée comme dispositif de soutien (12) assurant un raidissement de la carrosserie contre le gauchissement, dans laquelle des dômes d'amortissement (16) sont reliés entre eux par une entretoise (17) dans la zone supérieure des caissons de roues (13), dans laquelle les dômes d'amortissement (16) se trouvent avec l'entretoise (17) sur un plan transversal vertical (FQ) du véhicule automobile se rapportant au dispositif de soutien (12) et dans laquelle la séparation est fixée de manière amovible sur les cloisons de délimitation du compartiment arrière (10), **caractérisée en ce qu'**une cloison arrière de séparation (24), qui s'étend sur toute la hauteur de compartiment arrière (10), est montée comme dispositif de soutien (12) et **en ce qu'**une plaque d'appui (15), qui s'étend horizontalement et à angle droit par rapport au plan transversal (FQ) du véhicule automobile, est reliée de manière fixe avec l'entretoise (17) et avec les dômes d'amortissement (16), la cloison de séparation arrière (24) étant fixée de manière amovible sur la plaque d'appui (15), sur les caissons de roues (13) et sur un fond du compartiment arrière (14).

2. Carrosserie autoporteuse selon la revendication 1, **caractérisée en ce que** l'entretoise (17) comprend deux raidisseurs angulaires (28) fixés sur le côté inférieur de la plaque d'appui (15) et sur respectivement un dôme d'amortissement (16).

3. Carrosserie autoporteuse selon la revendication 1, **caractérisée par** une cloison de séparation avant (23) qui est disposée à l'extrémité arrière d'un habitacle pour les passagers (26), qui s'étend dans le sens transversal du véhicule automobile, qui est fixée sur la plaque d'appui (15) et qui forme avec le dispositif de soutien (12) un réceptacle (36), en particulier pour un réservoir de carburant.

4. Carrosserie autoporteuse selon la revendication 1, **caractérisée en ce que** la cloison de séparation arrière (24) comprend une ouverture de passage disposée en position centrale (37), par exemple pour un sac à skis.

5. Carrosserie autoporteuse selon la revendication 1, **caractérisée en ce que** la cloison de séparation arrière (24) est une plaque en magnésium moulée sous pression qui comprend des ouvertures de décharge (44).

6. Carrosserie autoportcuse selon la revendication 5, **caractérisée en ce qu'**une entretoise diagonale (38) est intégrée dans la forme en tant que raidissement central de la cloison de séparation (24).
